# EUROPEAN PATENT APPLICATION

(11) **EP 0 784 370 A1**
(43) Date of publication of application: **16.07.1997**
(21) Application number: 96927959.5
(22) Date of filing: 07.08.1996
(51) Int. Cl.: H02K 23/54

(54) **DIRECT CURRENT ELECTRICAL MACHINE**

(30) Priority: 28.05.1996 RU 96109925
(71) Applicant: YALESTOWN CORPORATION N.V., Curaçao, Netherlands Antilles (AN)
(72) Inventor: EVSEENKOV, Viktor Alexeevich, Moscow, 117342 (RU)
(74) Representative: BOVARD AG - Patentanwälte
(86) International application number: RU9600211
(87) International publication number: WO9636101

(57) **Abstract**

The application: the present invention is realized in the electrical engineering, namely in direct current electrical machines and may be used in any other field of engineering where the electrical drivers and generators are utilized.

The matter of the invention: the direct current electrical machine comprises a multipole stator with a casing, slit in a horizontal plane and provided with the holes for installing of permanent magnets(7) and with recesses on the ends thereof, said casing is slit on the air gaps in a plane, parallel to a magnetic system, elements of which are disposed in said casing, said elements are identical to each other in both halves thereof. Said system elements comprise permanent magnets(7), a slit core(6) and side cores with brush holders(12) and brushes(13). Said direct current electrical machine comprises also a rotor with the armature discs(14). The side cores are constituted of two parts: slit part(8) which abuts against said magnets(7) and is disposed in the end recesses(10,11), and integral part(9), said discs are embodied as detachable pieces.

In particular the integral part(9) is made as a stepped piece, dimensions of which both are equal and differ from the slit part dimension.

In particular the permanent magnets(7) are disposed on the one side of the armature disc plane, and said rotor is provided with additional armature discs and additional slit cores. The other modifications of the rotor shaft fastening are provided.

## Description

### FIELD OF THE INVENTION

The present invention relates to the electrical engineering and has particular reference to the direct current electrical machines and may be used in the field of engineering where an electrical motor drive or generators are utilized.

### BACKGROUND OF THE INVENTION

A direct current electrical machine is known from the prior engineering art(1) and comprises a multipole stator with a casing, slit in horizontal plane, and with the identical magnetic system elements in both halves of said casing, provided with the permanent magnets, a slit magnetic core, side magnetic cores and a brush holder with the brushes. Said machine also comprises a rotor, provided with the armature discs, arranged in spaced relationship on a common shaft along an axis thereof between said magnetic system elements.

Said cores are mounted symmetrically relatively to slit planes and are secured in the stator casing sockets. The sockets for the extreme cores are provided with the ribs which have the holes, wherein said brush holders with brushes are secured. The assembled rotor is secured between said stator parts by means of supports.

Said known direct current electrical machine of the above type will hereinafter be adopted as an analogue. The disadvantages of the above type direct current electrical machine are low service properties and large axle dimensions.

### SUMMARY OF THE INVENTION

The techincal result of said direct current electrical machine resides in:
- improving of the electrical machine performance;
- decreasing of the overall dimensions and the weight of said machine;
- providing of the possibility of the gap adjusting in said magnetic system;
- providing of the possibility of the electrical machine main units free installing in the object, component parts thereof being used as the electrical machine elements;
- providing of the possibility of motor power varying owing to the multi-armature assembly and the symmetrical and asymmetrical magnetic system utilization.

Said direct current electrical machine as well as an analogue comprises a multipole stator with a slit in a horizontal plane casing and the identical magnetic system elements in both halves thereof. Said elements comprise the permanent magnets, slit core and side jointed cores provided with the brush holders with the brushes. Said electrical machine comprises also a rotor with the armature discs. As distinct from said analogue said casing with the holes in the horizontal plane for permanent magnets installing and with the recesses on the ends thereof is provided. Said casing is additional slit on the air gaps in a plane, parallel to said magnetic system, and said side cores are constituted of two jointable parts, one of which is made as a slit part, and the other- as an integral part. Said slit part abuts against the magnets and is disposed in said casing recesses and said armature discs are disposed on the shaft and may be demounted from it.

Said integral part of the side cores is made as a stepped piece, a dimension of the lesser step is being equal to the dimension of said slit part.

Said side core integral and slit parts are made with the identical dimensions. The permanent magnets are disposed on the one side of the armature disc plane.

The rotor shaft is made as a hollow piece. The mounting flanges are provided on the rotor shaft, and said armature disc is provided with the locating and fastening holes.

The brushes are installed in said brush holder with the possibility of radial displacement. Said rotor is provided with the additional armature discs and the additional cores.

The above-listed features are substantial to said technical result achievement and are interrelated with each other.

The embodiment of said core as a jointed piece consisting of two jointed parts (slit and integral parts) enables to exclude the magnetic flux losses and a system demagnetization when it being assembled and disassembled.

The attachment of said core integral part to said casing and provision of the identical dimensions of said part and casing will result in a design strengthening. When said slit and integral core parts being provided with identical dimensions and being installed in the casing end recess a thickness of said side core may be equal to a recess depth or may be greater or lesser than said recess depth.

In this case said core or said recess may serve as the mounting seats, that enables abutting jointing said electrical machine with the object on said flange mounting seat.

The core integral part may be made as stepped piece, a dimension of the lesser step is being equal to an end recess dimension and said step is being installed therein, and the greater step may have any dimension. It enables to said greater step to act different functions (when said machine being attached to the object the core integral part greater step dimension is larger than said casing dimension, and when said machine being precisely jointed with said object the greater step dimension is equal to the object mounting seat dimension). It provides the possibility of the electrical machine installing in different objects without substantial changing thereof.

Said brushes may be installed in the brush holder with the possibility of angular displacement owing to a groove is provided within said holder. This enables to provide a brush position in a geometric neutral zone that results practically in a sparking exclusion and increasing of the electrical machine efficiency.

Said brushes are being in contact with said armature discs and may be directly mounted on the core.

The arrangement of said permanent magnets relatively to the armature discs may be different on both sides of the armature disc plane or on the one side only. It depends on the machine power. Under the symmetrical arrangement the more powerful magnetic flux is produced that results in power increasing but the dissymmetrical arrangement is cheaper and decreases the electrical machine overall dimensions.

The slit cores may be mounted in the middle part of said casing with using a cage or without it.

### BRIEF DESCRIPTION OF THE DRAWINGS

The present invention is explained by the accompanying drawings, illustrated the electrical machine design.
In Fig. 1 two-armature direct current electrical machine with a rotatable shaft and symmetrical magnetic system is shown.

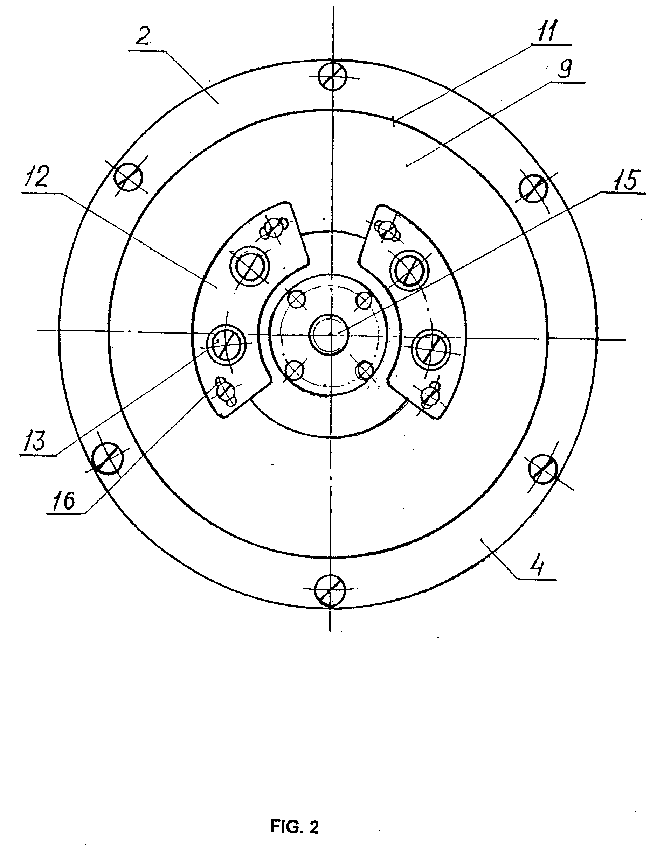

In Fig.2 a side view on the Fig.1 is shown.
In Fig.3 a side view on the Fig.1 with the moved apart symmetrical elements of the core slit part is shown.

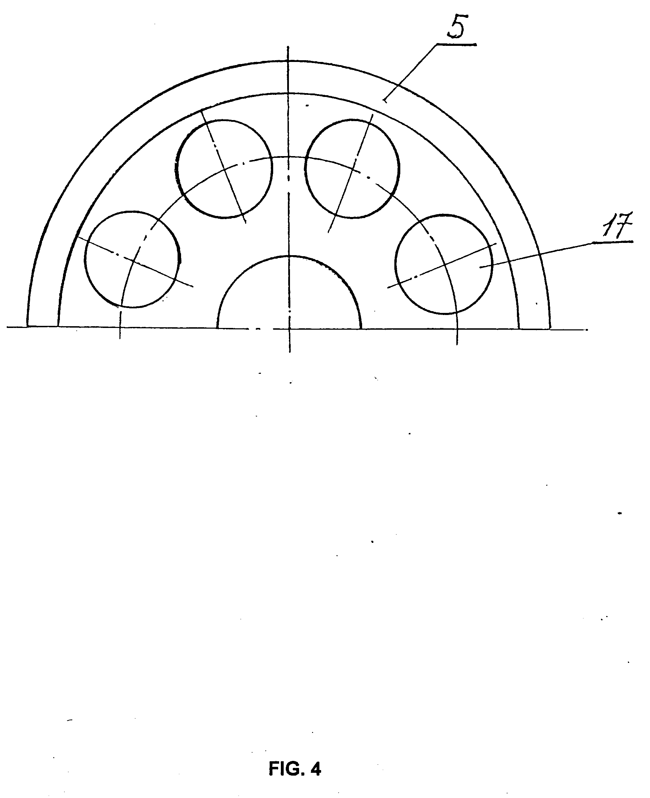

In Fig.4 a stator casing element is shown.
In Fig.5 one-armature direct current electrical machine with the rotatable shalt and a dissymmetrical magnetic system is shown.
In Fig.6 one-armature direct current electrical machine with symmetric magnetic system, rotatable armature disc and immobile axis is shown.

### DESCRIPTION OF THE PREFERRED EMBODIMENT

A direct current electrical machine comprises a stator, provided with a casing, slit in a horizontal plane and in a plane parallel to said magnetic system on an air gap and consisted of four parts(1,2,3,4), a cage(5) mounted between said parts and made of nonmagnetic material, provided with a slit core(6), permanent magnets(7) and jointed side cores, consisting of two parts: a slit part(8) and an integral part(9), the core slit part(8) being abutted against the magnets(7) and being disposed in the end recesses(10,11), a brush holder(12) with the brushes(13), installed within said holder, and a rotor, provided with the armature discs(14), mounted on a common shaft(15) between the permanent magnets(7) with the possibility of demounting.

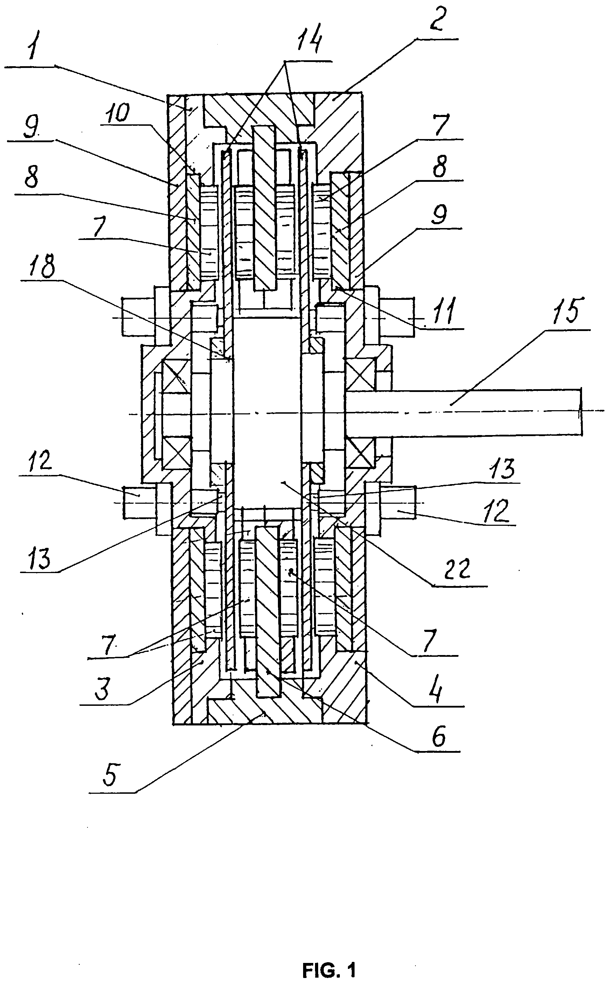

The dimensions and the embodiment of said side core parts may be different. Two versions of the embodiment are shown in Fig.1. According to the first version (shown in Fig.1, on the left side) the core integral part(9) is attached to said casing and has the identical dimensions with said casing. In this case said integral part strengthens the design.

According to the second version (shown in Fig.1, on the right side) the core slit(8) and integral(9) parts are embodied with identical dimensions and mounted in said casing end recess(10), a side core thickness may be equal to a recess depth or may be greater or lesser than said recess depth. In this case said core or said recess may serve as the mounting seats.

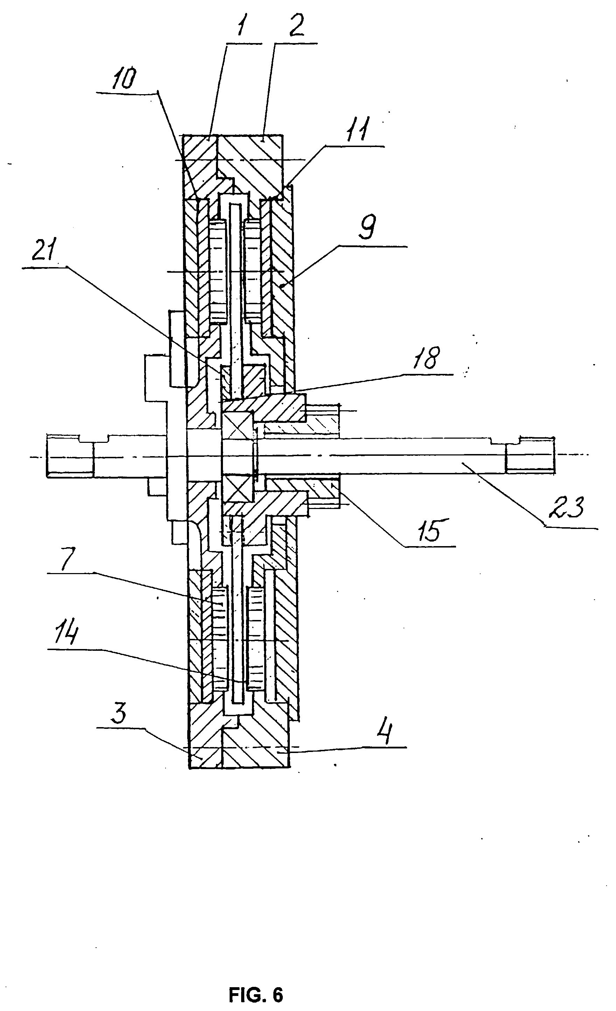

The core integral part(9) may be made as a stepped piece (Fig.6), a dimension of the lesser step is being equalled to the end recess dimension and is being installed therein, the great step may have any dimension. It depends on the functions acted by said step (when said machine being attached to the object the dimension of the core integral part(8) is larger than the casing dimension, and when said machine being precisely jointed with said object the greater step dimension is equal to the object mounting seat dimension).

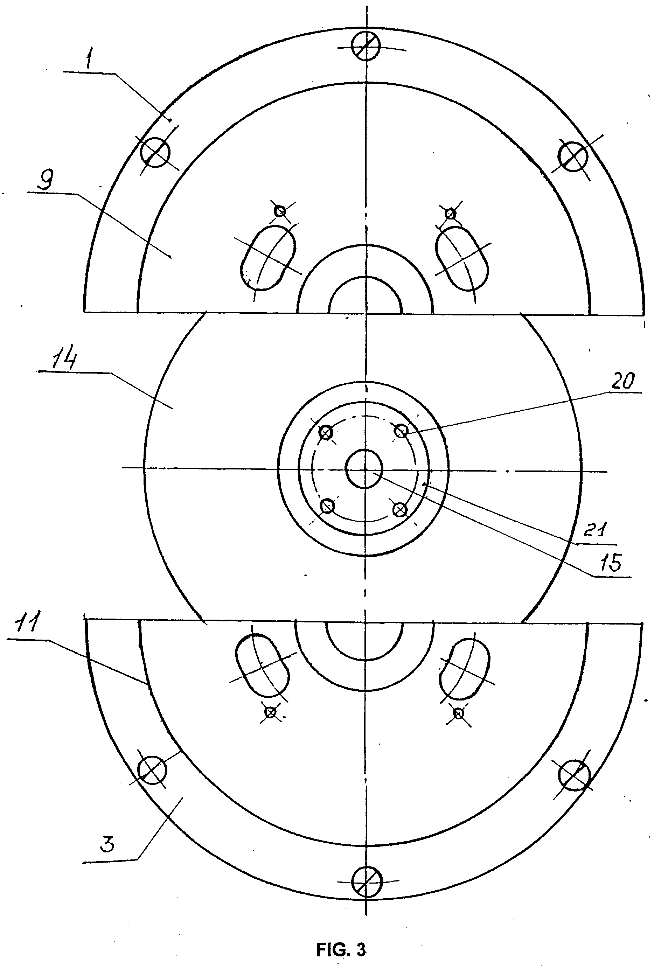

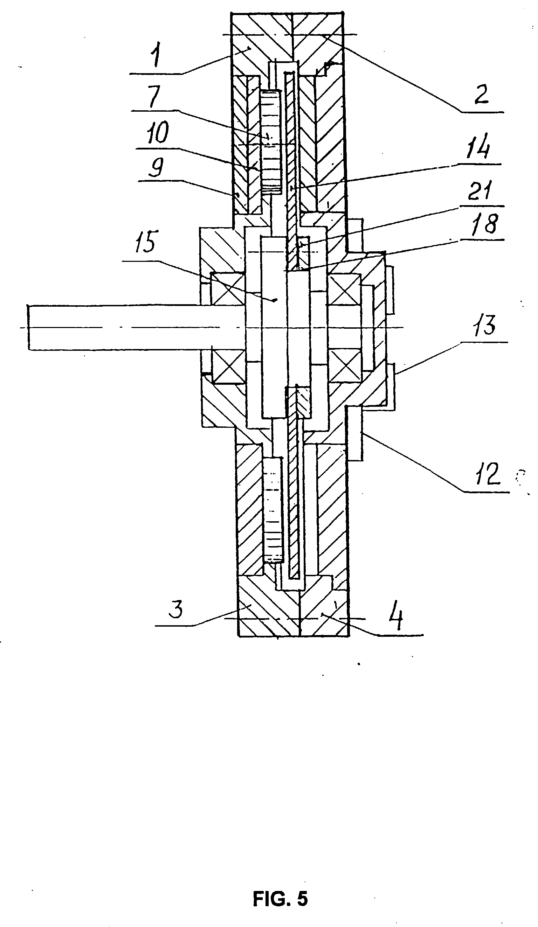

The brushes(13) may be installed in a brush holder(12) with the possibility of angular displacement. Said brushes(13) are being in contact with the armature discs(14)and may be mounted on the core (Fig.1, Fig.3). The arrangement of said permanent magnets(7) relatively to said armature discs(14) may be different: on both sides of the armature disc plane (Fig.6) or on the one side of said plane only (Fig.5). The slit cores 6 may be installed in the middle part of said casing with cage using or without it (Fig.1).

The direct current electrical machine is assembled by a modular method in a following way.

Firstly the magnetic system is assembled. For this purpose one of the slit part(8) elements is installed in said recess(10) in the one of the casing slit parts (for example 1), and the permanent magnets(7) are disposed in the casing holes(17) in such a way that said magnets abut against said slit part(8). The shape and the dimensions of said recess 10 are corresponding to the shape and dimensions of slit part(8) (it may be semicircular, square, etc.). The cage is then assembled with said slit core. This operation is done by the known method.

On the assembling of all casing parts, disposed on the one side from the slit axis, they are jointed together.

The electrical machine rotor, assembled on the separate position, is then installed into the casing.

The rotor assembling is carried out by the several methods. According to the first method the mounting flanges(18) are made on the shaft(15). The armature disc(14) is mounted on said flange(18), provided with the locating holes(19), the fastening holes(20) are being provided in said armature disc, a ring(21) is arranged on the other side and the armature disc(14) is fastening by the fastening elements. According to the second method of the rotor assembling a sleeve(22) with a flange is fastening on said shalt(15) and the armature disc(14) is mounted on said sleeve. The utilization of such method of fastening enables to carry out freely the rotor assembling and the armature discs replacement. The several discs may be thus mounted on the one shaft.

The shaft(15), on which the armature discs(14) are fastened, may be made as a hollow piece and may be mounted on a bearing support on the stationary axis.

The assembled parts are installed then into the second horizontal half of the machine. The parts are fastened with each other and the core integral part is attached on the stator casing, forming a magnetic system. The brush holder(12) with brushes(13) is installed, the brushes(13) are brought thereafter into contact with the armature discs(14). To provide precision assembling and design stiffness a lock joint system is provided on the casing side parts.

The direct current electrical machine is operating in a following way. The electrical voltage is applied at the brushes(13) that results in a current flow arising in the armature discs. The interaction of said current with permanent magnets magnetic field provides the turning moment arising on the machine shaft.

The core embodiment as a jointed piece enables to carry out the magnetic system assembling by a modular principle depending on the electrical machine purpose that enables to arrange the electrical machine with the optimal performance and minimum weight and overall dimensions for every task. Such machine design may be also used for the one-armature machine.

### INDUSTRIAL APPLICATION

Owing to above-described magnetic system there is possible to embody of casing-free modification of the electrical machine.

In this case the core (one of the integral parts thereof) serves as the casing and the armature disc is secured on the object output shaft directly. This enables substantially to simplify the electrical machine design and extend the field of the application thereof.

The electrical machine has also the high maintainability.

The direct current electrical machine design with the symmetrical magnetic system, rotatable armature disc and a stationary axis may be used as a wheel motor drive, e.g.,for invalid carriages, trucks, etc.
1. USSR author's certificate 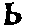 1690107, Int.Cl. H 02 K 23/54, 1991(an analogue).

## Claims

1. A direct current electrical machine comprising a multipole stator with a casing, slit in a horizontal plane, and the magnetic system elements, identical in both halves of said casing and provided with permanent magnets(7), a slit core(6) and side cores with brush holders(12) and brushes(13), and a rotor with a armature disc(14), characterized in that said casing is made with the holes(17) for said permanent magnets installing and with the recesses(11) on the ends thereoF said casing is additionally slit on the air gaps in a plane, parallel to the magnetic system, said cores are made as a jointed piece consisting of two jointable parts, one of which(18) is slit, and the other (9) is integral, the slit part(8) abuts against said magnets(7) and is disposed in said casing recesses(10,11), and said armature disc(14) is mounted on a shaft with the possibility of its demounting.

2. The direct current electrical machine as claimed in claim 1 characterized in that the side core integral part is made as a stepped piece, the lesser step dimension is being equalled to the slit part dimension.

3. The direct current electrical machine as claimed in claim 1, characterized in that the side core integral(9) and slit(8) parts are made with the identical dimensions.

4. The direct current electrical machine as claimed in claim 1 characterized in that the permanent magnets(7) are disposed on the one side of a armature disc(14) plane.

5. The direct current electrical machine as claimed in claim 1 characterized in that said shaft(15) is made as a hollow piece.

6. The direct current electrical machine as claimed in claim 1 characterized in that the mounting flanges(18) are provided on the shaft(15), and the armature disc(14) has the locating(19) and fastening(20) holes.

7. The direct current electrical machine as claimed in claim 1 characterized in that the brushes(13) are installed in the brush holder(12) with the possibility of the radial displacement.

8. The direct current electrical machine as claimed in claim 1 characterized in that said rotor is provided with the additional armature discs and the additional slit cores.
